# EUROPEAN PATENT SPECIFICATION

(11) **EP 2 618 664 B1**
(45) Date of publication and mention of the grant of the patent: **30.07.2014**
(21) Application number: 11781607.4
(22) Date of filing: 23.09.2011
(51) Int. Cl.: A01N 37/44, C05F 11/10, A01P 21/00, A01N 37/42, A01N 43/653

(54) **USE OF SINGLE AMINO ACIDS AT LOW CONCENTRATIONS FOR INFLUENCING THE LIFE PROCESSES OF CROPS**
VERWENDUNG VON EINZELAMINOSÄUREN IN GERINGER KONZENTRATION ZUR BEEINFLUSSUNG DER LEBENSPROZESSE VON NUTZPFLANZEN
UTILISATION D'ACIDES AMINÉS UNIQUES À BASSES CONCENTRATIONS POUR INFLUENCER LES PROCESSUS VITAUX DES CULTURES

(30) Priority: 23.09.2010 BE 201000569
(43) Date of publication of application: 31.07.2013
(73) Proprietor: Globachem, 3800 Sint-Truiden (BE)
(72) Inventor: QUAGHEBEUR, Koen, 3803 Sint-Truiden (BE)
(74) Representative: Caers, Raphael Frans Ivo
(86) International application number: PCT/IB2011/054208
(87) International publication number: WO 2012/038936

(56) References cited:
- WO-A1-00/25582
- GB-A- 955 685
- US-A1- 2004 209 777
- US-A1- 2008 194 407
- DATABASE WPI Week 198135 Thomson Scientific, London, GB; AN 1981-63554D XP002667112, & JP 56 032961 B (AJINOMOTO KK) 31 July 1981 (1981-07-31)
- DATABASE BIOSIS [Online] BIOSCIENCES INFORMATION SERVICE, PHILADELPHIA, PA, US; 2002, ATTOA G E ET AL: "Effect of some amino acids and sulphur fertilizers on growth and chemical composition of Iberis amara L. plant", XP002667113, Database accession no. PREV200400471538 & EGYPTIAN JOURNAL OF HORTICULTURE, vol. 29, no. 1, 2002, pages 17-37, ISSN: 1110-0206
- PARRADO ET AL: "Production of a carob enzymatic extract: Potential use as a biofertilizer", BIORESOURCE TECHNOLOGY, ELSEVIER BV, GB, vol. 99, no. 7, 8 February 2008 (2008-02-08), pages 2312-2318, XP022472753, ISSN: 0960-8524, DOI: 10.1016/J.BIORTECH.2007.05.029
- MAJEROWICZ N ET AL: "Growth and nitrogen metabolism of Catasetum fimbriatum (orchidaceae) grown with different nitrogen sources", ENVIRONMENTAL AND EXPERIMENTAL BOTANY, ELSEVIER, vol. 44, no. 3, 1 November 2000 (2000-11-01), pages 195-206, XP027289264, ISSN: 0098-8472 [retrieved on 2000-11-01]
- H. G. ASHOK KUMAR ET AL: "Effect of sugars and amino acids on androgenesis of Cucumis sativus", PLANT CELL, TISSUE AND ORGAN CULTURE, vol. 78, 1 January 2004 (2004-01-01), pages 201-208, XP55016533,
- DATABASE WPI Week 200170 Thomson Scientific, London, GB; AN 2001-609446 XP002635510, & JP 2001 199812 A (KOSAN HITEK KENKYUSHO KK) 24 July 2001 (2001-07-24)
- DATABASE CAPLUS [Online] CHEMICAL ABSTRACTS SERVICE, COLUMBUS, OHIO, US; 2007, L. Wang, Z. Wang, Z. Li & Y. Zhu: "Promotion of L-glutamic acid on anthrocyanin accumulation in Fuji apples.", XP002635511, retrieved from STN accession no. 2007:651854 Database accession no. 2007:651854 & L. WANG ET AL.: "Promotion of L-glutamic acid on anthocyanin accumulation in Fuji apples.", GUOSHU XUEBAO, vol. 23, no. 2, 2006, pages 157-160, C2,
- DATABASE CAPLUS [Online] CHEMICAL ABSTRACTS SERVICE, COLUMBUS, OHIO, US; 17 February 2011 (2011-02-17), A. Caronia, G. Gugliuzza & P. Inglese: "Influence of L-proline in Citrus sinensis (L.) ('New Hall' and 'Tarocco Scire') fruit quality", XP002635512, retrieved from STN accession no. 2011:203733 Database accession no. 2011:203733 & A. CARONIA ET AL.: "Influence of L-proline on Citrus sinensis (L) fruit quality.", ACTA HORTICULTURAE, no. 884 (Proc.XIth Int. Symp.on Bioregulators, 2009), 1988, pages 423-426,
- DATABASE WPI Week 200925 Thomson Scientific, London, GB; AN 2009-E91123 XP002635514, & CN 101 352 165 A (UNIV LIAONING PETROLEUM&CHEM TECHNOLOG) 28 January 2009 (2009-01-28)
- DATABASE CAPLUS [Online] CHEMICAL ABSTRACTS SERVICE, COLUMBUS, OHIO, US; 1991, Y. H. Kim & J. Janick: "Abscisic acid and proline improve desiccation tolerance and increase fatty acid content of celery somatic embryos", XP002635515, retrieved from STN accession no. 1991:424270 Database accession no. 1991:424270 & Y. H. KIM & J. JANICK: "Abscisic acid and proline improve desiccation tolerance and increase fatty acid content of celery somatic embryos", PLANT, CELL, TISSUE AND ORGAN CULTURE, vol. 24, no. 2, 1991, pages 83-89,
- DATABASE CAPLUS [Online] CHEMICAL ABSTRACTS SERVICE, COLUMBUS, OHIO, US; 1982, V. Rajagopal: "Effect of abscisic acid with glutamate on the production of proline in barley leaves", XP002635516, retrieved from STN accession no. 1982:612799 Database accession no. 1982:612799 & V. RAJAGOPAL: "Effect of abscisic acid with glutamate on the production of proline in barley leaves", PLANT BIOCHEMICAL JOURNAL, vol. 8, no. 2, 1981, pages 89-92,

## Description

This invention relates to the use in small quantities and doses of certain single L-amino acids for influencing the life processes of plants.

Amino acids are the building blocks of proteins, and occur therefore in nature in large quantities. Very often they are also added to formulations and compositions for stimulating the growth and the production of vegetable crops. They are included in formulations containing fertilizers, plant nutrition, but also in pesticide formulations. In these compositions, the amino acids may be present in their single form, in the form of proteins, or as polypeptides in protein hydrolysates.

Amino acids are added to plants for various reasons. In combination with fertilizers it is stated that they may improve the absorption thereof, and mixtures of different amino acids and/or polypeptides are often added as a nitrogen (N) source for the crops. All amino acids always contain at least one nitrogen atom. Usually amino acids are thus added as nutrition to plants. In this context, amino acids are generally applied to crops in relatively large amounts.

In US 2008/0194407 highly nitrogenous chelates of metals with amino acids or other nitrogen-containing substances are used as a foliar nutrition for plants. The metal dosing used is significant, whereby also the amino acid residues are employed in high doses.

EP 1241149 describes a method for making a fertilizer for plants via the hydrolyzation of proteins. More specifically use is made of animal proteins derived from offal. By using proteolysis enzymes, these proteins are broken down, and a mixture is obtained which may be used as a fertilizer for plants. This mixture will have a random composition of different types of single amino acids, di-, tri-and polypeptides which may function as a nutrient for plants.

The exact composition of these protein hydrolysates is obviously very difficult to determine. One might put that these mixtures contain a wide variety of amino acids in bound and unbound state, and this in very high concentrations. According to EP 1241149 the concentration of L-amino acids is an important feature for the use as manure or fertilizer, because they are useful building blocks for the synthesis of enzymes and proteins. Such mixtures may exhibit a beneficial activity with respect to increasing the yield of crops, although this effect is only due to the nurturing function of the amino acids and polypeptidesconcerned, for example as a nitrogen source, or their function as raw material. These beneficial results are by no means the result of an activity as an active substance, for example because it would affect the metabolism of the plant, or would function as a plant growth regulator, or alike.

In EP926113 a biostimulant is further described which consists of a combination of nitrogen, potassium and phosphorus sources and plant growth regulators further containing amino acids. This biostumulant increases the efficiency of conventional fertilization.

US 2004/0209777 A1 describes the use of a composition containing proline for enhancing the quality of fruits and berries, to enhance bud formation and to increase the sugar level.

Also Caronia, A. et al, in "Influence of L-proline on Citrus sinensis fruit quality", International Society for Horticultural Science, describes the use of proline in repeated treatments to improve stress resistance and nitrogen absorption of the orange trees, and the organoleptic characteristics of the oranges.

Kim, Y.H. et al, in "Abscisic acid and proline improve desiccation tolerance and increase fatty acid content of celery somatic embryos", Plant Cell, Tissue and Organ Culture (1991), describes the employment of abscisic acid and proline, and this to influence the germination of plant embryos in in-vitro experiments.

Also Rahagopal, V, "Effect of abscisic acid with glutamate on the production of proline in barley leaves", Plant Biochemical Journal (1981), describes the use of abscisic acid and/or glutamate to increase the level of proline in in vitro experiments.

DE 2217896 describes the use of the sulfur containing amino acid methionine as a plant growth regulator.

RU 2337544 describes the use of glycine in a field wherein sugar beets are sown, to activate the defense mechanisms of plants, to promote the synthesis, to increase the yield and sugar content, and to increase resistance to diseases.

DD 248 499 A1 describes the use of N-ethylglycine to stimulate the yield of tomato plants.

EP 1124419 and WO 00/25582 describe a composition containing glutamic acid, always in combination with glycolic acid, applied in a carrier medium in which the carrier medium is a pesticide, fungicide or calcium nitrate. This mixture would increase the productivity of plants. Regarding the concentration of glutamic acid and glycolic acid, a very broad range is indicated, ranging from 0.5 ppm to 2500 ppm. At 500 ppm of glutamic acid only a small effect was obtained, and the combination with glycolic acid is stated as a requirement to obtain a significant effect.

L. Wang et al in "Promotion of L-glutamic acid on anthocyanin accumulation or Fuji apples," Guoshu Gualei Zazhishe (2006) describes the use of glutamic acid in relatively high doses as a precursor for 5-aminolevulinic acid, and this necessarily more than 5 weeks before the picking, in order to increase the coloring of Fuji apples.

In GB 955 685 amino acids are used to increase the stimulating effect of the plant hormone 2,4-dichlorophenoxy acetic acid on the enzyme activity, and thereby to obtain an improved growth. Glutamic acid is thereby always used together with methionine. An enzymatic activity is attributed to the added amino acids.

JP 2001199812 proposes the use of glutamic acid or a salt thereof in a composition with uracil and proline to accelerate flower induction and to obtain growth stimulation. In the example, use is not made of glutamic acid but of glycine.

CN 101352165 describes the use of a compound which, apart from mainly sugars and phosphate fertilizer also contains abscisic acid, glutamic acid and phenyl alanine, and this with a high dosage to improve the color of pears.

Parrado et al. in "Production of carob enzymatic extract: Potential use as biofertilizer", Bioresource Technology 99, 2312-2318 (2008) discloses the use of a carob germ hydrolyzate extract composition (CGHE) comprising glutamine in combination with arginine, glutamic acid, aspartic acid, histidine and lysine on plants, in particular tomato plants. This treatment results in an enhanced plant height, number of flowers per plant and number of fruits per plant. However, the CGHE formulation also contains a range of phytohormones and further relevant ingredients.

This protein hydrolyzate is applied as fertilizer in peat and it cannot be deduced from the experimental data in this citation at what rate the composition, let alone the individual amino acids, actually has been applied.

WO 2005/102047 describes the use of the magnesium salt of dihydrojasmonic acid order to increase the tolerance to abiotic stress conditions, such as high temperatures and low humidity. To the compositions sometimes L-arginine was added.

None of these previous publications, however, describes the use of very low doses of L-amino acids to influence the life processes of plants. All previous publications describe either the use of amino acids, polypeptides, etc. as fertilizer or as a nitrogen source, wherein the amino acids are applied in large quantities on the plants or in the soil, or the amino acids are described in combination with other active substances or pesticides .

### SUMMARY OF THE INVENTION

The object of this invention is therefore to provide a composition for influencing the life processes of plants as defined in claim 1 and which entails thereby an as low as possible risk to humans and nature.

This object is achieved by the use of a composition containing single L-amino acids, including precursors and biologically still active metabolites of single L-amino acids, for influencing the life processes of plants, whereby the total amount of single L-amino acids when applying the composition is at least 0.5 g/ha and at most 250 g/ha, and whereby the single L-amino acids are selected from the group of glutamine, asparagine and histidine, and combinations thereof with each other and/or with arginine and/or with glutamic acid and/or with aspartic acid and or with lysine.

Surprisingly, the inventor has now found that very low doses of these selected single L-amino acids nonetheless exert a very strong influence over the life processes of the treated crops. These low doses of 0.5 g/hectare up to at most 250 g/ha influence the life processes of plants, and usually in such a way that the crop yields are greatly increased. Also the coloring may be stimulated, the ripening be influenced, and/or the quality of the fruit and/or seeds of agricultural and horticultural crops be stimulated or improved. Moreover, the effects which the L-amino acids have on the plants are so strong that they can not be explained by the N content of amino acids. The L-amino acids act in the composition of the present invention not as any significant N-source or nutrient for the treated crops. A treatment with 250 g/ha of glutamine corresponds to only about 47.9 grams of nitrogen per hectare. This is negligibly small compared to the normal foliar fertilization which is usually given, and the nitrogen administrations of which are at least 500 grams per hectare, or in comparison with soil fertilizations in which these tend to be much higher, in the range of 30 to 200 kilograms of nitrogen per hectare. It is clear that the selected L-amino acids exert a regulatory and stimulating function on the metabolism of the plants when they are applied in such low doses. The selected L-amino acids thus act in the composition as used in the present invention as an active compound.

### DETAILED DESCRIPTION OF THE INVENTION

Very surprising is the fact that the effects may already be achieved without the addition of substances which are known as plant hormones, i.e. with the selected L-amino acids by themselves.

The increased crop yields are influenced by two different factors. The inventor has namely found that by applying the selected single L-amino acids on the crops, fruit set is very strongly affected, whereby there is thus more fruit present or left on the crops. The inventor has also found that the fruits themselves comparably increase in size after an application of the composition of the present invention. When applied to fruit trees for example, more fruit will be present on the trees, which will also often be at least as large in size as those of fruit trees on which a comparative control composition without active ingredient was applied, or in many cases even be larger. In a very large increase in the number of fruit, the size of it may on the other hand suffer somewhat, but not more than what may be explained by the higher number of fruits. The total fruit yield is in any case increased by treatment of the invention. In cereals, the grains in the ears for example, will occur in significantly higher numbers or be significantly larger by applying the composition according to the present invention and also the number of ears per unit of land area will be increased.

The inventor has also surprisingly found that the yield-increasing effect applies for both monocot and dicot crops. Consequently, the proceeds of almost all economically important crops are improved with this invention, which forms an important advantage.

Besides the increased yield of crops, the present invention further brings the advantage that the quality of the crops is greatly increased. It appears that the treated crops have a higher sugar and higher protein content. The composition also appears at the low doses of L-amino acids to possibly have an influence on the color and/or the ripening of the proceeds. In fruit the color of the fruit may be more intense after the application of the composition of the present invention. These additional effects may be influenced by secondary factors such as timing of application, the nature of the crop, and alike

Without being limited by this theory, the inventor believes that the selected single L-amino acids, which in large amounts only function as a nutrient, have, on application at very low levels, an influence on the synthesis or action of some endogenous plant growth regulators, similar to a hormonal influence, whereby thus the life processes of annual and/or perennial monocot or dicot plants are affected, and externally observable effects or phenomena are caused.

It is further very important that the total amount of the selected L-amino acids remain within the above mentioned range. A composition whereby one specific single amino acid when applying the composition is present at a dose between 0.5 to 250 g per hectare, but whereby further other selected single L-amino acids are present such that the total dose of selected single L-amino acids exceeds by far 250 grams per hectare will therefore not achieve the desired effect. The activity of the selected L-amino acids as active substance may therefore in such a case disappear. If in this case, a growth stimulating effect is achieved anyway, this will mainly be due to the function of the amino acids as N-source and/or as plant nutrient.

Preferably, the total amount of selected single L-amino acids when applying the composition, is at least 1 g/ha and at most 50 g/ha.

In this low dose range usually the best results are achieved, and the growth of crops is in many cases optimally regulated. More specifically, is the growth of the fruits and seeds strongly stimulated, and is the yield of the crops very high.

As already described above, the present invention relates to the use of a composition of the selected single L-amino acids, mainly for influencing the growth of crops. The influencing of crops may vary depending on the dosage of the selected single L-amino acids which are applied on the crops, and various forms of influencing are possible.

Thus, this invention relates more specifically to the use of the above composition for inhibiting the vegetative growth of crops, whereby the total amount of selected single L-amino acids when applying the composition is at least 1 g/ha and at most 30 g/ha.

If the selected L-amino acids are applied in such quantity to the crops, a clear inhibitory effect is observed. This growth inhibiting effect only refers to the vegetative plant growth, i.e. the growth of the shoot. This is usually the growth of the green part of plants, and is in no way to be confused with the growth of the fruits or seeds, also called generative growth, which in no way is hampered.

In these dosages, the composition as used in the present invention may therefore also be used as a growth inhibitor. This may for example bring the additional advantage that the crops are less fast in need to be pruned, less likely to lie down, etc ... Also, due to the reduced leaf growth, the fruit and seeds may receive an improved access to sunlight and aeration, which may also benefit the quality and yield. Fruits, which thanks to the reduced leaf growth received an increased dose of sunlight, will show a more intense coloring and their protein and sugar will also be increased.

It should further be noted that if the vegetative growth is impaired, meaning the growth in the longitudinal direction of the plant and substantially the growth of the green parts of the plant, then the generative plant growth, i.e. growth of the fruit and the seeds, is strongly stimulated. This may be explained by an assumed balance shift within the plant from vegetative to generative growth. More energy and nutrients are sent to the reproductive organs of the plant, whereby more and/or larger fruit and seeds will be formed. As was mentioned above, the inhibitory effect obtained is in no way related to the growth of the fruits and seeds, and the increased yield and fruit set which were discussed above, are still taking place at these very low dosages.

Preferably the composition as used in the invention, in case it is used for inhibiting the vegetative growth of crops such as described above, is applied at least 2 times on the crops, thereby preferably maintaining an interval of at least 1 day or 2 days and at most 6 weeks, more preferably at least 3 or 4 days and at most 5 weeks, more preferably at least 5 or 6 days and at most 4 weeks, and even more preferably an interval of at least 1 week and at most 3 weeks. The mentioned intervals are very suitable for arable crops, and may shorten to at most 2 weeks. With trees, especially with fruit trees, the interval may generally be somewhat longer, preferably from 1 to 3 weeks between the two treatments.

The inventor has found that if the composition is applied at least twice using such interval, a very good inhibition of vegetative growth is achieved. Preferably, the composition is applied twice. Optionally, the composition may also be applied more than twice, preferably every time respecting the interval mentioned above.

Obviously the invention is not limited by this and it is not excluded that for various selected single L-amino acids, an acceptable influencing is also already obtained if the composition is applied only once.

Furthermore, the invention also relates to the use of the above described composition for stimulating the growth of agricultural and horticultural crops, whereby the total amount of selected single L-amino acids when applying the composition is at least 30 g/ha and at most 100 g/ha.

In this context, growth means both the vegetative and the generative growth. In this dosage range, which is somewhat higher than the above mentioned range for the inhibition of vegetative growth, the inventor has determined that the entire crop growth is stimulated. The plants will therefore have an overall better growth. The yield of the crops and fruit set will still be improved, but we have found that also the shoot and the green part of the plant show an improved growth.

The skilled person will himself be able to determine the amount or dosage of treatment which is optimal for a specific crop. If the skilled person only seeks the improvement of the yield of a crop, and if it hereby yields benefits to limit the vegetative growth, he better choses the selected single L-amino acids in the above mentioned total amounts of 1 to 30 g/ha. If however for specific crops an improved overall growth is targeted, whereby it is desired to also stimulate the growth of the shoot and the green plant-portion, preferably amounts from 30 to 100 g/ha are to be used.

If the composition is used to stimulate the overall growth of plants as described above, the composition is preferably applied once on the crops.

With a single treatment, a good stimulation of both the vegetative and generative growth is obtained.

A single treatment with the selected single L-amino acids is generally sufficient to stimulate the growth and is therefore preferable, although it is not a strict requirement. It is also possible that the overall growth may be stimulated by applying the composition several times. The skilled person is able to determine, depending on the L-amino acid used, the crops, and the intended purpose, and alike, whether the composition has to be applied once or several times.

The selected L-amino acids are selected from the group of L-amino acids containing an N-atom in the R-group, the acid forms of L-amino acids containing an N-atom in the R-group and combinations thereof. Hereby the R-group refers to a side group which in many cases occurs in the usual hydrocarbon connection between the amino group (H₂N-) at one end and the acid group (-COOH) at the other end of the amino acid.

All these preferred amino acids have thus an N-atom in their R-group (or side chain of the amino acid) except those amino acids whose R group has an acidic form of an R group containing a nitrogen atom, such as glutamic acid and aspartic acid.

Preferably the composition contains substantially no multiple peptides. We found that multiple peptides do not show primarily the same growth regulatory effects as the selected single L-amino acids, not even in small dosages. The inclusion of multiple peptides such as polypeptides or oligopeptides apparently brings little or no added value to the composition. However, it is possible that the incorporation of multiple peptides has a negative impact on the activity of other active substances present. It is also difficult to check whether there any single amino acids are part of the multiple peptides, or whether possibly later single amino acids may be separated from them so that the total dosage of selected single amino acids may unintentionally rise anyway. This makes it more difficult to assure a specific dosage of the selected single L-amino acids whereby the operation of the composition of the present invention may also not so readily and accurately be controlled and guaranteed. For these reasons, the composition preferably contains essentially no multiple peptides.

In the treatment with one single amino acid, it could sometimes be noted that the strength of the response to one particular amino acid would exhibit a bimodal pattern as a function of the size of the dosage. The location of the peaks of the pattern, i.e. at which concentrations the strongest effects could be recorded, and the location of the valley between two peaks, i.e. the range wherein the response was again a little less, appeared however to depend on the choice of the amino acid and of the life process which one wishes to influence. Thus treatment with histidine showed a higher response in the range of 0.5-5 g/ha and in a range of 15-250 g/ha, compared to the response in the intermediate range of 5-15 g/ha.

In a preferred embodiment of the present invention the composition further contains S-abscisic acid or one of its salts.

S-abscisic acid is a plant hormone which occurs naturally in plants. S-abscisic acid suppresses the activity of other growth-stimulating plant hormones and is commonly known as a natural growth inhibitor. Together with the plant growth promoting hormones such as auxins, cytokinins and gibberellins, abscisic acid regulates ageing processes, leaf fall, and above all it has a growth inhibitory effect on vegetative growth. As mentioned above, this is the growth of the shoot of the plant, i.e. the growth in the longitudinal direction and usually the growth of the green plant part. The action of S-abscisic therefore bears some similarities with the above-described operation of the selected single L-amino acids in very low dosages. Also, the generative growth, i.e. the growth of fruits and seeds, will be enhanced by a reduction of the vegetative growth by shifting a balance in the plant. S-abscisic acid may, due to its inhibitory effect also have a yield increasing effect on crops. More specifically, the size of the fruits and seeds will be increased, and the fruiting of crops will also be encouraged.

The inventor has now surprisingly found that S-abscisic acid shows a synergistic effect in combination with the low doses of the selected single amino acids. This effect exceeds the result which may be expected by combining the effects induced by the same doses of the selected single amino acids and S-abscisic acid, if applied separately.

The composition as used in the invention preferably also contains a growth-regulating substance A selected from the group of gibberellin synthesis inhibitors, precursors of plant hormones, or combinations thereof.

The inventor has found that a further synergistic effect may occur between these growth-regulating substances A and the effect described above of yield increase caused by the S-abscisic acid. If in addition to the S-abscisic acid one of these growth-regulating substances A is added to the composition with the selected single L-amino acids, an even stronger increase in crop yields is obtained.

Preferably, the growth-regulating substance is a gibberellin-synthesis inhibitor, selected from the group of trinexapac-ethyl, paclobutrazol, uniconazol-P, chloromequat-Cl, mepiquat-Cl, 2-isopropyl-4-dimethylamino-5-methylphenyl-1-piperidinecarboxylate methyl chloride (also known as "AMO-1618"), etcyclacis, ancymidol, flurprimidol, prohexadione Ca, daminozide, 16,17-dihydorgas, chlorpropham and combinations of two or more thereof. More preferably, trinexapac-ethyl is used.

These growth-regulating substances A all exhibit a strong inhibitory effect on the gibberellin synthesis, and a strong synergistic effect with the effect of abscisic acid and/or the selected single L-amino acids, whereby the crop yield may be significantly increased additionally.

In a further preferred embodiment of this invention, the growth-regulating substance A is a precursor to a plant hormone selected from ethephon, 1-amino cyclopropane-1-carboxylic acid (ACC) and combinations thereof.

Ethephon and ACC are both precursors for the plant hormone ethylene. Precursors for ethylene in combination with abscisic acid and/or the selected single L-amino acids exhibit a surprising synergistic effect which is very beneficial for the yield of the crop. Of course, other precursors for ethylene may also be used in the present invention.

The present invention is however by no means limited thereby. Any other precursor to a plant hormone or inhibitor for the synthesis of gibberellins deemed appropriate by the skilled person may also be used.

In a further preferred embodiment, the composition as used in the invention further contains a pesticide selected from the group of herbicides, insecticides, fungicides, bactericides, nematicides, algicides, molluscicides, rodenticides, virucides, substances which induce plant resistance, biological control agents such as viruses, bacteria, nematodes, fungi and other microorganisms, repellents of birds and animals, plant growth regulators, or a combination of two or more thereof.

If a composition as used in the present invention also contains pesticides, this composition will comprise apart from a yield enhancing effect also a function as a pesticide. Different types of pests such as insects, bacterial pathogens and the like may disastrously affect crop yield and may even lead to the death of the crops. If the composition as used in the present invention only induces a yield increasing effect in the plants, there is still the possibility that this effect is offset as a result of such pest infestation. Therefore it may be useful to add the pesticide to the composition. The composition will hereby combine a growth regulator effects with an effect of pest control. Because the active ingredients which create these two different effects are present in a single composition, only one composition will have to be applied on the crop. This represents considerable time and money savings for the farmer concerned. It should be noted that a reduced vegetative growth by itself may already entail a risk for affection by diseases and plagues. In some cases this effect is already at least partially achieved by the application according to the present invention.

In a particularly preferred embodiment of the present invention the pesticide is a fungicide selected from the group of triazoles, and combinations thereof.

The inventor has surprisingly found that fungicides selected from the group of triazoles in addition to a fungicidal effect also may enhance the growth influencing activity of the selected single L-amino acids. Adding these fungicides from the group of the triazoles therefore offers two important additional benefits.

These triazoles are preferably selected from the group of epoxiconazole, triadimenol, propiconazole, metconazole, cyproconazool, tebuconazole, flusilazole, difenoconazole, penconazole, paclobutrazol, prothioconazole, and combinations of two or more thereof. The triazoles are preferably selected according to the crop to be treated. As such are epixiconazole, propiconazole, tebuconazole more appropriate for cereals, metconazole, tebuconazole, for example for rapeseed, and difenoconazole is more appropriate for fruit cultures.

The composition as used in the present invention is no means limited hereto, and any other triazoles considered suitable by the skilled person, may also be used.

In an embodiment of the invention the used composition further contains one or more active substances which increase the plant's own defence mechanism. Besides their basic resistance plants possess the capacity to increase their resistance to specific infections in response to induction by micro-organisms from the outside. One distinguishes therein systemic acquired resistance (SAR) and induced systemic resistance (ISR). In the SAR, the inducing micro-organism is pathogenic, whereas in ISR this is not the case. Preferably, substances are therefore added which promote these mechanisms, such as jasmonic acid, ethyljasmonate or another precursor for ethylene which affect the ISR response, or salicylic acid and/or chitosan, or another substance which affects the SAR mechanism. The inventors have found that these active substances may also bring a growth inhibiting effect.

In further embodiments of the invention the used composition further contains one or more surfactants.

Preferably the surfactants are selected from the group of calcium alkyl sulfonates, ethoxylated castor oil, ethoxylated alcohols, glycols or polyols, polyoxyethylated alkyl phenols, polyoxyethylated fatty alcohols and/or fatty amines, fatty alcohol polyglycol ether sulfates, alkyl sulphonates or alkylaryl sulphonates and dispersants, ethoxylated sorbitan esters and siloxanes, or a mixture of two or more thereof.

Surfactants are substances which are able to decrease the surface tension of an aqueous mixture. In compositions which are to be applied to plants, they may perform different functions. They may for instance increase the solubility of the active ingredients in the usually water based mixture. Furthermore, they often perform a function of wetting agent. Because the surface tension of the mixture is reduced by it, hydrophobic surfaces may be wetted more quickly. Adding a wetting agent may thus lead to a better distribution of for example the sprayed liquid, and to a better wetting of the sprayed crops. Furthermore, surfactants may act as adjuvants. Hereby, they increase the absorption of the active substance by the plant. The above described functions of the surfactants ensure that less active substance should be dosed without affecting the activity of the active substance. This brings an economic advantage and also ensures that the impact on the environment is reduced.

Furthermore, the used composition may contain one or more UV-filtering substances.

Sunlight reaching the composition may cause a premature inactivation of the active substances. To prevent this, preferably one or more UV-filtering substances are added as a matter of precaution. Several suitable UV filters are known in the art.

In a further embodiment the used composition further contains an anti-foaming agent.

Preferably the anti-foaming agent is selected from the group of silica, polydialkylsiloxanes, fluoroalkylphosphinic acids or salts thereof, or a mixture of two or more thereof.

In a further embodiment the used composition further contains a fertilizer.

The composition as used in the present invention will influence the life processes of plants, such that the yield is increased. If a fertilizer is further present in the composition, it is ensured that the plants have sufficient nutrients available to enable this growth, whereby the yield may be further increased.

Preferably, the composition is applied in a formulation selected from the group of powders, water soluble powders, water dispersible powders, granules, suspension concentrates, emulsifiable concentrates, concentrated emulsions, suspoemulsions, coated granules, microcapsules, tablets, water soluble concentrates, or combinations of two or more thereof.

Preferably, the composition is diluted with water.

A composition which may be diluted with water may be sold commercially in a concentrated form with a small volume. This form may then be dissolved or mixed with water to a larger volume which eventually may be applied to the plants. An aqueous dilution may very easily be applied to the plants, and also ensures an even distribution of active substances on the crops, whereby a constant concentration and an evenly spread dosage of the active substances during application is assured. The latter represents within the context of the present invention an important advantage because the activity of the active ingredients is dependent on concentration and/or dosage.

Preferably, the composition is applied on the crops by spraying or atomizing.

By spraying or atomising a uniform and even distribution of the composition on the crops may be obtained.

Preferably, the crops are selected from the group of annual and perennial monocot and dicot crops.

The composition as used in the present invention may be used on monocot crops as well as on dicot crops, and shows a good activity on both groups of plants.

Preferably, the crops are selected from fruit, cereals, rape, beet, potatoes, and any possible combinations thereof.

These crops show a strong increase in yield upon application of the composition according to the present invention.

This invention further relates to a use as described above whereby the influencing of the life processes of plants is selected from increasing of crop yields, the increasing of the fruit set of plants or the number of fruits or seeds, the increasing of the fruit or grain crops, the fruit size or the diameter of fruits or seeds, the enhancing of the color or coloring of the fruit, the influencing of the maturation of crops, the increasing of the protein content of fruit or seeds, the increasing of the total yield, the increasing of the yield of a first pick, the increasing of the yield of colored fruit at a first pick, the shortening of the extensions of shoots, and combinations thereof.

The effect of coloring may thereby be dependent on the amino acid used and the time of application. For vegetative growth inhibition, it will generally be the lower doses up to 30 g/ha which indirectly will give a better coloring. With later applications, such as just before the harvest, whereby no growth inhibition is achieved or intended, it may be that the best dose will be higher, again depending somewhat on the amino acid. A distinction should also be made between maturation or ripening and coloring. This consideration namely applies primarily to coloring. For maturation, depending on the crop, time and amino acid, other preferred dosages possibly apply.

The selected single L-amino acids bring about a physiological response in the plants having an externally noticable influence, primarily on the plant growth. In the description above, this reaction was very generally described as the influencing of the life processes, such as the growth of crops. It has already been stated that this influencing entails amongst others an increased crop yield, an increased fruit set, an enhanced color of the fruit, or alike. All of the above listed phenomena are also associated with the physiological response of plants to low doses of the selected L-amino acids. The invention therefore relates to any uses or processes aimed at generating one of these phenomena in plants by the use of low doses of the selected L-amino acids.

In the above description of the invention, the quantities of the substances to be administered are mentioned in grams/hectare (g/ha). This represents the amount with which the substances are applied to the crops. Preferably the substances are applied in an aqueous solution whereby for example for an easy conversion approximately 1000 liters of this solution is applied to a plot of 1 hectare. This means for example that in a composition wherein the selected L-amino acids are applied in an amount of 50 g per hectare, they are present in an aqueous solution at a concentration of 50 ppm. In practice, a different amount of water per hectare may be used, and the conversion to the desired concentration may therefore be adjusted. Thus, with a use of only 200 liters per hectare, which also means about 200 kg of water, a treatment intended for 50 g per hectare should use a concentration of 50 g per 200 kg or about 250 ppm by weight.

The invention is now further illustrated by the following examples.

### Example 1: Improvement of the coloring with apple.

This experiment was performed on mature apple trees of the variety Jonagold (mutant King). The sprayings were performed with an atomizer at 300 liter of water/ha. The spray liquid used contained in the first test 300 ppm wt of glutamine and in the second test with a multiple treatment each time 150 ppm wt glutamine. The spray liquid further contained surfactants and a UV filter.

Improving the coloring of Jonagold is a very important advantage for the grower. Only well-colored fruit achieve a good price. It is also important to harvest these colored fruits as early as possible because the fruit quality (firmness, shelf life, conservation potential) is much better. The more fruit one harvests in the first picking, the better. If more fruits can be harvested in the first picking, the remaining, not yet color colored fruit, will color more easily and therefore be of better quality.

Finally, an earlier harvest of the fruits will have a major positive impact on the quality of the flower bud quality of the following year. Fruits which have been left hanging for a long time as a rule lower substantially the production of the following year.

The apples of the trees in the test field were harvested in 3 times. Glutamine was used as active substance, in a first test 2 weeks before the expected first picking date, and in the second test first 2 weeks and then again 1 week before the expected harvest date. The dosages used are shown below. At harvest, the total yield, the kilos colored fruits which could be harvested in the first picking and the average fruit weight over the total harvest (in grams per apple fruit) were determined. The results are shown in Table 1, and compared with a control without treatment.

**Table 1**

| **Object** | **kg (total harvest)** | **kg 1^{st} picking** | **1^{st} picking in % of the total harvest** | **Fruit weight (g)** |
|---|---|---|---|---|
| Control | 41 | 15 | 36 | 239 |
| 90 g/ha | 39 | 16 | 41 | 248 |
| 2 x 45 g/ha | 39 | 18 | 46 | 257 |

The total harvest was not or hardly affected by the treatments. This application of the invention was directed to coloring, not to the fruit set, which is no longer affected due to the late timing of this treatment. More importantly, the treatments led to an increase in the useful yield at the first picking, which constitutes the most valuable part of the total harvest. The single treatment achieved an effect which was still relatively modest, but the effect with the spread treatment was more pronounced. An increase of 5% or 1 kg is interesting, but may still be partially explained by the slightly lower yields because the fruit colors easier with less fruit on the same plant. The effect of dual treatment may however not be explained by the slightly lower yield, or by natural variation. A difference of 3 kg or 10% makes an important difference for the fruit grower. He has thus better quality fruit, which he may conserve longer. This will also result in a better coloring of the second and third pickigng and in better flower bud quality the following year.

### Example 2: Improvement of the coloring with apple

In an experiment similar to Example 1, glutamine was used 2 times on Jonagold, the first time 14 days before the picking and then a few days before the picking. The dosage of the treatment was this time 2 times 15 g/ha (each time with a concentration of 50 ppm wt in an atomisation of each time 300 liter of water per hectare). The % first picking was determined and is shown in Table 2, in comparison with a control test without treatment.

**Table 2**

| **Object** | **% 1st picking** |
|---|---|
| Control | 29 |
| Glutamine 2 x 15 g/ha | 40 |

Like in Example 1, a double treatment of glutamine gives an increase in the first picking of around 10% in absolute percentage and with respect to the weight of the total harvest. Jonagold readily achieves a yield of 60 tons/ha. An increase of approximately 10% of the percentage first picking means thus an increase of usually at least 6 tons/ha of the portion of the harvest having the highest quality and which offers the highest value to the grower.

### Example 3: Increase of both the yield and the coloring with apple.

This experiment was performed on mature apple trees of the variety Jonagold, Jonagored mutant. Unlike the two previous trials, the focus here is primarily on increasing the yield. To achieve this, the treatments have to be started much earlier in the season. The dose is hereby lower than in the two previous applications because the goal is here fruit set and growth inhibition, instead of coloring. One could suffice with two treatments, at the start of the growing season, but several applications over the entire growing season gives a more certain result. The applications in this test were started around the end of flowering and were repeated every 7 to 14 days, depending on the weather conditions. There were in total 7 treatments, more precisely on April 24, May 7, May 14, May 20, June 9, June 16 and June 24. The sprayings were performed with an atomiser.

Glutamine, each time at a concentration of 50 ppm wt in 300 liter water/ha, and thus a dose of 15 g/ha, was applied both separately and in combination with S-abscisic acid (ABA). In the combination test, ABA was administered at the first 2 sprayings of the season, and always at a concentration of 3.3 ppm in 300 l water/ha spraying liquid, which corresponds to a dosage of 1.0 g/ha of ABA. At the end of the season, the extension of the shoots was measured and the number of fruits per tree determined. Shortly after the end of the sprayings, on June 25, the average fruit diameter was also determined. The results are shown in Table 3.

**Table 3**

| **Object** | **Number of fruits** | **Fruit diameter (mm) on June 25** | **Average Shoot length (cm)** |
|---|---|---|---|
| Control | 113 | 44.0 | 28.7 |
| Glutamine | 127 | 43.7 | 25.6 |
| Glutamine + ABA | 142 | 44.0 | 16.4 |

This experiment clearly shows that glutamine increases the fruit set, in view of the number of fruits per tree, and that this effect is even stronger in combination with ABA. The fruit size itself is thus apparently not affected. The shoot length with glutamine alone is noticeable, but is in the combination strongly inhibited.

Glutamine alone shows in this trial an increase of 14 fruits per tree. Plant density of a standard orchard is about 1714 trees/ha. This means, at five apples per kilo, that this generates an increased yield of nearly 5000 kg/ha, which is significant. The combination of the two products gives an even higher increased yield of more than 9900 kg/ha, or more than the double of the treatment with glutamine alone. The advantage of the growth inhibition for the fruit grower is not only that he achieves an increased yield, but it also means a labor savings during winter pruning, and a more airy tree, which is positive for a better coloring of the fruit and to avoid diseases.

This experiment shows that different doses of glutamine may have a positive growth inhibiting effect when applied repeatedly at low doses.

### Example 4: Improvement of the coloring with apple

In this experiment, glutamine was applied 4 days before the pick on a plot of Jonagored, and in a concentration of 8.3 ppm wt in 300 l/ha, which is equivalent to a dose of 2.5 g/ha of glutamine. In table 4 below the % of first picking is shown.

**Table 4**

| **Object** | **% 1^{st} picking** |
|---|---|
| Control | 34.9 |
| Glutamine 2.5 g/ha | 55.8 |

A treatment a few days before the harvest at very low doses in this trial clearly increases the percentage of first picking.

### Example 5: Growth inhibition with wheat

This experiment was performed in four repetitions on wheat seedlings. Per repetition six seedlings were sown in a jar and monitored. When the seedlings were about 15 cm high, they were treated once with the following treatments, and after 10 days the growth increase was measured. The dose is given in g/ha whereby the conversion from the concentration was done with a use of 300 l/ha. The results are shown in Table 5.

**Table 5**

| Object | Dose | Growth increase (cm) | % wrt control |
|---|---|---|---|
| Control | - | 10.9 | 100 % |
| Trinexapac-ethyl | 250 g/ha | 7.8 | 72% |
| Histidine | 100 g/ha | 10.2 | 94% |
| Histidine | 2 g/ha | 10.0 | 92% |
| Histidine + Trinexapac-ethyl | 100 g/ha+ 250 g/ha | 7.2 | 66 |
| Histidine + Trinexapac-ethyl | 10 g/ha + 250 g/ha | 7.7 | 71 |
| Histidine + Trinexapac-ethyl | 2 g/ha + 250 g/ha | 6.8 | 63 |

From this experiment, one may deduce that histidine in a very low amount has a growth inhibitory effect on wheat. This effect is also apparently somewhat dose dependent. From further experiments with only histidine, it was noted that the strength of the effect showed a bimodal pattern, depending on the dosage in the sense that the response at about 10 g/ha was less than in the tests with the lower (2 g/ha) and higher (100 g/ha) dosages listed in the table. This finding was confirmed when these tests were repeated, so apparently it concerned not an artifact.

The combination of histidine with trinexapac-ethyl shows a synergistic effect.

### Example 6: Growth inhibition with barley

This experiment was performed in four repetitions on barley seedlings. Per repetition, six seedlings were sown in a jar and monitored. When the seedlings were about 15 cm high, they were treated once with the following treatments, and after 8 days the growth increase was measured. The dose is given in g/ha whereby the conversion from the concentration was done at a use of 300 l/ha. The results are shown in Table 6.

**Table 6**

| Object | Dose | Growth increase (cm) | % wrt control |
|---|---|---|---|
| Control | - | 7.1 | 100 |
| Tebuconazole | 250 g/ha | 3.2 | 45 |
| Glutamine + Tebuconazole | 0.5 g/ha + 250 g/ha | 1.6 | 23 |

In this test, the enhancing effect of a low dose of glutamine on the growth inhibition of tebuconazole is also clearly observable.

## Claims

1. Use of a composition containing single L-amino acids for influencing the life processes of plants, whereby the single L-amino acids are selected from the group of glutamine, asparagine, histidine and combinations thereof with each other and/or with arginine and/or with glutamic acid and/or with aspartic acid and/or with lysine, and whereby the total amount of the selected single L-amino acids when applying- the composition to the crops is at least 0.5 g/ha and at most 250 g/ha, whereby the influencing of the life processes of plants is selected from the group consisting of the increasing of crop yields, the increasing of the fruit set of plants or the number of fruits or seeds, the increasing of the fruit size or the grain size of crops, the fruit size or the diameter of fruits or seeds, the enhancing of the color or coloring of the fruit, the influencing of the maturation of crops, the increasing of the protein content of fruits or seeds, the increasing of the total yield, the increasing of the proceeds of a first pick, the increasing of the yield of colored fruit at a first pick, the shortening of the extension of shoots, and combinations thereof.

2. Use according to claim 1 whereby the total amount of the selected single L-amino acids when applying the composition is at least 1 g/ha and at most 50 g/ha.

3. Use according to claim 1 for inhibiting the vegetative growth of crops, whereby the total amount of the selected single L-amino acids when applying the composition is at least 1 g/ha and at maximum 30 g/ha.

4. Use according to claim 1 for stimulating the generative growth of agricultural and horticultural crops, whereby the total amount of the selected single L-amino acids when applying the composition is at least 30 g/ha and maximum 100 g/ha.

5. Use according to any one of the preceding claims whereby the composition further contains S-abscisic acid or one of its salts.

6. Use according to any one of the preceding claims whereby the composition further contains a growth regulating substance selected from the group of gibberellin synthesis inhibitors, precursors of plant hormones, or combinations thereof.

7. Use according to any one of the preceding claims, whereby the composition further comprises a pesticide selected from the group of herbicides, insecticides, fungicides, bactericides, nematicides, algicides, molluscicides, rodenticides, virucides, substances which induce resistance in plants, biological control agents such as viruses, bacteria, nematodes, fungi and other microorganisms, repellents for birds and animals, plant growth regulators, or a combination of two or more thereof.

8. Use according to claim 7 whereby the pesticide is a fungicide selected from the group of triazoles and combinations thereof.

9. Use according to any one of the preceding claims whereby the composition further comprises one or more active substances which increase the plant's own defense mechanism, preferably jasmonic acid, ethyljasmonate or salicylic acid.

10. Use according to any one of the preceding claims, whereby the composition further comprises one or more surfactants.

11. Use according to any one of the preceding claims whereby the composition further contains one or more UV-filtering substances.

12. Use according to any one of the preceding claims, whereby the composition further contains an anti-foaming agent.

13. Use according to any one of the preceding claims, whereby the composition further contains a fertilizer.

14. Use according to any one of the preceding claims whereby the composition is applied in a formulation selected from the group of powders, water soluble powders, water dispersible powders, granules, suspension concentrates, emulsifiable concentrates, concentrated emulsions, suspoemulsions, coated granules, microcapsules, tablets, water soluble concentrates or combinations of two or more thereof.

15. Use according to any one of the preceding claims wherein the crops are selected from the group of annual or perennial monocot or dicot crops.

## Patentansprüche

1. Verwendung einer Zusammensetzung, die einzelne L-Aminosäuren enthält zur Beeinflussung der Lebensprozesse von Pflanzen, wobei die einzelnen L-Aminosäuren ausgewählt sind aus der Gruppe von Glutamin, Asparagin, Histidin und Kombinationen davon miteinander und/oder mit Arginin und/oder mit Glutaminsäure und/oder mit Asparaginsäure und/oder mit Lysin und wobei die Gesamtmenge der ausgewählten L-Aminosäuren bei Anwendung der Zusammensetzung auf die Nutzpflanzen mindestens 0,5 g/ha und höchstens 250 g/ha beträgt, wobei das Beeinflussen der Lebensprozesse der Pflanzen ausgewählt ist aus der Gruppe bestehend aus dem Erhöhen der Ernteausbeute, dem Erhöhen des Fruchtansatzes der Pflanzen oder der Anzahl von Früchten oder Samen, dem Erhöhen der Fruchtgröße oder der Korngröße der Nutzpflanzen, der Fruchtgröße oder dem Durchmesser der Früchte oder Samen, dem Verstärken der Farbe oder Färbung der Frucht, dem Beeinflussen der Reifung der Nutzpflanzen, der Erhöhung des Proteingehalts der Früchte oder Samen, dem Erhöhen der Gesamtausbeute, dem Erhöhen des Ertrags einer ersten Pflückung, dem Erhöhen der Ausbeute von gefärbten Früchten bei einer ersten Pflückung, dem Verkürzen der Ausdehnung der Sprosse und Kombination davon.

2. Verwendung nach Anspruch 1, wobei die Gesamtmenge der ausgewählten einzelnen L-Aminosäuren beim Anwenden der Zusammensetzung mindestens 1 g/ha und höchstens 50 g/ha beträgt.

3. Verwendung nach Anspruch 1 zum Hemmen des vegetativen Wachstums von Nutzpflanzen, wobei die Gesamtmenge der ausgewählten einzelnen L-Aminosäuren beim Anwenden der Zusammensetzung mindestens 1 g/ha und höchstens 30 g/ha beträgt.

4. Verwendung nach Anspruch 1 zum Stimulieren des generativen Wachstums von landwirtschaftlichen und Gartennutzpflanzen, wobei die Gesamtmenge der ausgewählten einzelnen L-Aminosäuren beim Anwenden der Zusammensetzung mindestens 30 g/ha und höchstens 100 g/ha beträgt.

5. Verwendung nach einem der vorherigen Ansprüche, wobei die Zusammensetzung ferner S-Abscisinsäure oder eines ihrer Salze enthält.

6. Verwendung nach einem der vorherigen Ansprüche, wobei die Zusammensetzung ferner eine wachstumsregulierende Substanz enthält, die ausgewählt ist aus der Gruppe von Hemmstoffen der Gibberellinsynthese, Vorläufern von Pflanzenhormonen oder Kombinationen davon.

7. Verwendung nach einem der vorherigen Ansprüche, wobei die Zusammensetzung ferner ein Pestizid umfasst, das ausgewählt ist aus der Gruppe von Herbiziden, Insektiziden, Fungiziden, Bakteriziden, Nematiziden, Algiziden, Mollusciziden, Rodentiziden, Viruziden, Substanzen, die in Pflanzen eine Resistenz induzieren, biologischen Kontrollmitteln wie etwa Viren, Bakterien, Nematoden, Pilzen und anderen Mikroorganismen, Abwehrmitteln für Vögel und Tiere, Pflanzenwachstumsregulatoren oder Kombinationen zweier oder mehrerer davon.

8. Verwendung nach Anspruch 7, wobei das Pestizid ein Fungizid ausgewählt aus der Gruppe von Triazolen und Kombinationen davon ist.

9. Verwendung nach einem der vorherigen Ansprüche, wobei die Zusammensetzung ferner eine oder mehrere aktive Substanzen umfasst, die den pflanzeneigenen Abwehrmechanismus erhöhen, vorzugsweise Jasmonsäure, Ethyljasmonat oder Salicylsäure.

10. Verwendung nach einem der vorherigen Ansprüche, wobei die Zusammensetzung ferner ein oder mehrere Tenside umfasst.

11. Verwendung nach einem der vorherigen Ansprüche, wobei die Zusammensetzung ferner ein oder mehrere UV-filternde Substanzen umfasst.

12. Verwendung nach einem der vorherigen Ansprüche, wobei die Zusammensetzung ferner ein Antischaummittel umfasst.

13. Verwendung nach einem der vorherigen Ansprüche, wobei die Zusammensetzung ferner einen Dünger umfasst.

14. Verwendung nach einem der vorherigen Ansprüche, wobei die Zusammensetzung in einer Formulierung angewandt wird, die ausgewählt ist aus der Gruppe von Pulvern, wasserlöslichen Pulvern, in Wasser dispergierbaren Pulvern, Granula, Suspensionskonzentraten, emulgierbaren Konzentraten, konzentrierten Emulsionen, Suspoemulsionen, beschichteten Granula, Mikrokapseln, Tabletten, wasserlöslichen Konzentraten oder Kombinationen zweier oder mehrerer davon.

15. Verwendung nach einem der vorherigen Ansprüche, wobei die Nutzpflanzen ausgewählt sind aus der Gruppe von einjährigen oder mehrjährigen monokotylen oder dikotylen Nutzpflanzen.

## Revendications

1. Utilisation d'une composition contenant des acides L-aminés uniques pour influencer les processus vitaux de plantes, selon laquelle les acides L-aminés uniques sont sélectionnés dans le groupe consistant en glutamine, asparagine, histidine et leurs combinaisons les unes avec les autres et/ou avec l'arginine et/ou avec l'acide glutamique et/ou avec l'acide aspartique et/ou avec la lysine, et selon laquelle la quantité totale des acides L-aminés, quand on applique la composition aux cultures, est d'au moins 0,5 g/ha et d'au plus 250 g/ha, selon laquelle l'influence sur les processus vitaux des plantes est sélectionnée dans le groupe consistant à accroître les rendements des cultures, à accroître la nouaison des plantes ou le nombre de fruits ou semences, à accroître la taille des fruits ou la taille de grain des cultures, la taille des fruits ou le diamètre des fruits ou semences, à améliorer la couleur ou la coloration des fruits, à influencer la maturation des cultures, à accroître la teneur en protéines des fruits ou semences, à accroître le rendement total, à accroître le produit d'une première cueillette, à accroître le rendement de fruits colorés à la première cueillette, à raccourcir l'extension des pousses, et leurs combinaisons.

2. Utilisation selon la revendication 1, selon laquelle la quantité totale des acides L-aminés uniques sélectionnés, quand on applique la composition, est au moins de 1 g/ha et au plus de 50g/ha.

3. Utilisation selon la revendication 1 pour inhiber la croissance végétative des cultures, selon laquelle la quantité totale des acides L-aminés uniques sélectionnés, quand on applique la composition, est au moins de 1 g/ha et au maximum de 30 g/ha.

4. Utilisation selon la revendication 1 pour stimuler la croissance générative des cultures agricoles et horticoles, selon laquelle la quantité totale des acides L-aminés uniques sélectionnés, quand on applique la composition, est au moins de 30 g/ha et au maximum de 100 g/ha.

5. Utilisation selon l'une quelconque des revendications précédentes, selon laquelle la composition comprend en outre de l'acide S-abscissique ou un de ses sels.

6. Utilisation selon l'une quelconque des revendications précédentes, selon laquelle la composition contient en outre une substance régulatrice de croissance sélectionnée dans le groupe des inhibiteurs de synthèse des gibbérellines, précurseurs d'hormones de plante ou leurs combinaisons.

7. Utilisation selon l'une quelconque des revendications précédentes, selon laquelle la composition comprend en outre un pesticide sélectionné dans le groupe des herbicides, insecticides, fongicides, bactéricides, nématicides, algicides, molluscicides, rodenticides, virucides, substances qui induisent une résistance dans les plantes, agents de contrôle biologique tels que virus, bactéries, nématodes, champignons et autres micro-organismes, répulsifs pour oiseaux et animaux, régulateurs de croissance des plantes ou une combinaison de deux ou de plus de deux de ceux-ci.

8. Utilisation selon la revendication 7, selon laquelle le pesticide est un fongicide sélectionné dans le groupe des triazoles et des combinaisons de ceux-ci.

9. Utilisation selon l'une quelconque des revendications précédentes, selon laquelle la composition comprend en outre une ou plusieurs substances actives qui augmentent le propre mécanisme de défense de la plante, de préférence de l'acide jasmonique, du jasmonate d'éthyle ou de l'acide salicylique.

10. Utilisation selon l'une quelconque des revendications précédentes, selon laquelle la composition comprend en outre un ou plusieurs tensioactifs.

11. Utilisation selon l'une quelconque des revendications précédentes, selon laquelle la composition contient en outre une ou plusieurs substances filtrant les UV.

12. Utilisation selon l'une quelconque des revendications précédentes, selon laquelle la composition contient en outre un agent antimousse.

13. Utilisation selon l'une quelconque des revendications précédentes, selon laquelle la composition comprend en outre un engrais.

14. Utilisation selon l'une quelconque des revendications précédentes, selon laquelle la composition est appliquée dans une formulation sélectionnée dans le groupe des poudres, poudres solubles dans l'eau, poudres dispersibles dans l'eau, granulés, concentrés en suspension, concentrés émulsifiables, émulsions concentrées, suspo-émulsions, granulés enduits, microcapsules, tablettes, concentrés solubles dans l'eau ou des combinaisons de deux ou de plus de deux de ceux-ci.

15. Utilisation selon l'une quelconque des revendications précédentes, selon laquelle les cultures sont sélectionnées dans le groupe des cultures monocotylédones ou dicotylédones annuelles et vivaces.
